# EUROPÄISCHE PATENTSCHRIFT

(11) **EP 2 880 853 B1**
(45) Veröffentlichungstag und Bekanntmachung des Hinweises auf die Patenterteilung: **02.01.2019**
(21) Anmeldenummer: 13742654.0
(22) Anmeldetag: 01.08.2013
(51) Int. Cl.: H04N 5/222, G06T 7/73, G06T 7/80, H04N 5/247

(54) **VORRICHTUNG UND VERFAHREN ZUR BESTIMMUNG DER EIGENLAGE EINER BILDAUFNEHMENDEN KAMERA**
APPARATUS AND METHOD FOR DETERMINING THE DISTINCT LOCATION OF AN IMAGE-RECORDING CAMERA
DISPOSITIF ET PROCÉDÉ DESTINÉS À DÉTERMINER LA SITUATION D'UNE CAMÉRA DE PRISE DE VUE

(30) Priorität: 03.08.2012 DE 102012107153
(43) Veröffentlichungstag der Anmeldung: 10.06.2015
(73) Patentinhaber: Mika, Thorsten, 42799 Leichlingen (DE); Fehlis, Hendrik, 53119 Bonn (DE)
(72) Erfinder: Mika, Thorsten, 42799 Leichlingen (DE); Fehlis, Hendrik, 53119 Bonn (DE)
(74) Vertreter: Patentanwälte Bauer Vorberg Kayser
(86) Internationale Anmeldenummer: PCT/EP2013/066175
(87) Internationale Veröffentlichungsnummer: WO 2014/020108

(56) Entgegenhaltungen:
- US-A1- 2010 245 593
- CHANDARIA J ET AL: "The MATRIS project: Real-time markerless camera tracking for Augmented Reality and broadcast applications", JOURNAL OF REAL-TIME IMAGE PROCESSING, SPRINGER, DE, Bd. 2, Nr. 2-3, 1. November 2007 (2007-11-01), Seiten 69-79, XP007907937, ISSN: 1861-8200, DOI: 10.1007/S11554-007-0043-Z

## Beschreibung

Die Erfindung betrifft eine Vorrichtung und ein Verfahren zur Bestimmung der Eigenlage einer bildaufnehmenden Kamera innerhalb einer Umgebung, in der Strukturen optisch erfassbar sind.

Eine Bestimmung der Eigenlage einer Bildkamera innerhalb eines Raumes ist insbesondere bei "Virtual Studio"-Fernsehproduktionen erforderlich, um eine virtuelle Szene einer realen Szene zu überlagern, welche die Bildkamera von dem Studio aufnimmt. Damit die virtuelle Szene so berechnet bzw. so einer realen Szene überlagert werden kann, dass eine korrekte Übereinstimmung zwischen den realen und den virtuellen Elementen besteht, muss die exakte Position und Orientierung der Bildkamera bekannt sein.

Dabei sind verschiedene Ansätze bekannt, um diese Eigenlage einer aufnehmenden Kamera möglichst genau bestimmen zu können. Beispielsweise offenbart die Patentschrift EP 0 909 100 B1 die Bestimmung der Eigenlage einer aufnehmenden Fernsehkamera direkt aus dem Bild dieser Fernsehkamera. Dabei werden Punkte eines speziellen Musters innerhalb eines virtuellen Studios, aber auch virtuelle Objekte verwendet.

Allerdings können Muster im Bild der aufnehmenden Kamera oftmals nicht ausreichen, um die Eigenlage dieser Kamera in jeder Situation sicher zu ermitteln. Dies kann insbesondere in Zoomsituationen der Fall sein, bei denen oftmals nur wenige oder gar keine Messpunkte außerhalb des herein gezoomten Objekts sichtbar sind. Daher schlägt beispielsweise die Patentanmeldung GB 2 329 292 A vor, die aufnehmende Kamera mit einer zusätzlichen Messkamera zu versehen, welche LEDs in der Szene erkennt. Die Lage dieser LEDs wurde vorher vermessen, so dass hierüber die Eigenlage der Messkamera ermittelt werden kann. Hieraus kann dann indirekt auch die Eigenlage der zugehörigen Fernsehkamera bestimmt werden, da die Lage der Messkamera gegenüber der Fernsehkamera fest und bekannt ist.

Auch die Patentanmeldung GB 2 325 807 A offenbart beispielsweise ein System, bei dem eine aufnehmende Kamera mit einer Hilfskamera versehen ist, welche in Richtung der Decke des Studios ausgerichtet ist, um Muster an der Decke zu erkennen. Hieraus kann erneut die Eigenlage der Hilfskamera und damit indirekt auch die Eigenlage der aufnehmenden Kamera bestimmt werden.

Darüber hinaus ist es aus der Patentanmeldung EP 1 594 322 A2 bekannt, die Eigenlage einer Kamera ohne zusätzliche Marker oder Muster im Studio zu bestimmen, wobei jedoch vor der Aufnahme eine Vielzahl von Referenzbildern der Szene in verschiedenen Kameralagen aufgenommen und gespeichert wird. Bei der eigentlichen Aufnahme durch die Kamera können diese Referenzbilder dann herangezogen und mit den aktuell aufgenommenen Bildern verglichen werden, um so die jeweilige Eigenlage der Kamera zu bestimmen.

Ferner können Sensoren an der Kamera eingesetzt werden, um Bewegungen der Kamera zu detektieren und so auf die veränderte Eigenlage der Kamera zu schließen oder eine anderweitige Bestimmung der Eigenlage zu unterstützen. Bei Kameras mit fester Brennweite ist es auch bekannt, die Eigenlage der Kamera anhand von bekannten Punkten, Markierungen, Mustern, etc. zu bestimmen, wobei 2D- und 3D-Muster eingesetzt werden können.

Insbesondere die Ergebnisse einer Lageberechnung mit einer zusätzlichen Messkamera und Markern im Raum hängen jedoch stark von der Qualität der Messkamera ab. Hierbei müssen üblicherweise große Öffnungswinkel verwendet werden, damit die Messkamera viel von der aufzunehmenden Szene sieht und trotz diverser Verdeckungen möglichst viele Markierungspunkte erfassen kann. Ein großer Öffnungswinkel bedeutet aber eine geringere Ortsauflösung, so dass die Berechnungen hierdurch stark verrauscht und nicht ausreichend genau sein können. Gerade im Fernsehbereich werden jedoch oftmals bildführende Kameras mit sehr langer Brennweite verwendet, damit man sehr nahe an Objekte heran zoomen kann. Je länger die Brennweite ist, desto eher wird dann ein Rauschen oder eine Deplatzierung der virtuellen Objekte aufgrund mangelnd genauer Berechnung der Lage der virtuellen Bilder sichtbar, was sehr nachteilig ist, so dass derartige Verfahren für den Fernsehbereich nur sehr eingeschränkt nutzbar sind.

Ferner ist aus dem Artikel *"*The MATRIS project: real-time markerless camera tracking for Augmented Reality and broadcast applications" von Chadaria et al., Journal of Real-Time Image Processing, Springer, Bd. 2, Nr. 2-3, 1. September 2007, Seiten 69-79 ein System bekannt, bei dem eine bildaufnehmende Kamera mit einer sogenannten "inertial measurement unit - IMU" ausgestattet wird. Die IMU umfasst Beschleunigungssensoren, Gyroskope und Magnetometer. Die Umgebung, in welcher das System genutzt werden soll, wird zuerst in einer "Off-line"-Phase modelliert, um einen Satz an Bildern und Merkmalen zu erhalten, die als Ortungspunkte für das Tracking dienen können. In der "On-line"-Phase werden Bilder von der bildaufnehmenden Kamera dazu verwendet, die modellierten Merkmale aufzufinden. Ein Modul kombiniert dann die Daten des IMU mit den Trackingdaten, um die Eigenlage der Kamera bzw. die endgültige Lage für jeden Videoframe zu bestimmen.

Die Patentanmeldung US 2010/0245593 A1 offenbart ein System zur Kalibrierung einer Motion Capture-Kamera und einer hochauflösenden Videokamera. Die Motion Capture-Kamera erzeugt 3D-Positionsdaten von dynamischen Markern auf einem sich bewegenden Objekt, während die Videokamera aus den gleichen Markern 2D-Positionsdaten erzeugt.

Die Kalibrierung der beiden Kameras erfolgt durch die Berechnung von extrinsischen und intrinsischen Parametern der Videokamera, wobei geometrische Relationen zwischen den 3D-Positionsdaten und den 2D-Positionsdaten verwendet werden. Ein Detektor sucht dabei die dynamischen Marker in den Bildern der Motion Capture-Kamera und den Bildern der hochauflösenden Videokamera. Dabei werden die Marker in den Bildern der Motion Capture-Kamera gesucht und daraus 3D-Positionsdaten bestimmt. Ferner werden die Marker in den Bildern der Videokamera gesucht und daraus 2D-Positionsdaten bestimmt.

Aufgabe der Erfindung ist es, eine verbesserte Vorrichtung und ein verbessertes Verfahren zur Ermittlung der Eigenlage einer bildaufnehmenden Kamera bereitzustellen, um hierdurch beispielsweise in einem Chromakey-Verfahren möglichst rauscharme und genau platzierte virtuelle Bilder erzeugen zu können, wobei die Vorrichtung und das Verfahren insbesondere für den Fernseh- und Filmbereich geeignet sein sollen.

Erfindungsgemäß wird diese Aufgabe durch eine Vorrichtung gemäß dem unabhängigen Anspruch 1 gelöst. Vorteilhafte Weiterbildungen der Vorrichtung ergeben sich aus den Unteransprüchen 2-7. Die Aufgabe wird ferner durch ein Verfahren gemäß Anspruch 8 gelöst. Vorteilhafte Weiterbildungen des Verfahrens ergeben sich aus den Unteransprüchen 9-10.

Die erfindungsgemäße Vorrichtung eignet sich zur Bestimmung der Eigenlage einer bildaufnehmenden Kamera innerhalb einer Umgebung, in der Strukturen optisch erfassbar sind, wobei die Bestimmung der Eigenlage die Bestimmung der Position der Kamera in der x-, y- und z-Koordinate und/oder ihrer Orientierung im Raum umfassen kann. Die Orientierung wird beispielsweise durch Parameter wie den Schwenk-, Neige- und/oder Rollwinkel definiert. Vorzugsweise werden sowohl die Position, als auch die Orientierung der bildaufnehmenden Kamera bestimmt, aber die Erfindung ist nicht auf diese vollständige Bestimmung der Eigenlage der Kamera in der Umgebung beschränkt, sondern die Vorteile der Erfindung können auch für sich genommen für die Bestimmung der Position oder die Bestimmung der Orientierung genutzt werden.

Die erfindungsgemäße Vorrichtung umfasst wenigstens die bildaufnehmende Kamera, eine an dieser Kamera fest in einer bekannten Lage montierte Messkamera und eine Auswerteeinheit, welche dazu ausgebildet ist, wenigstens aus den Strukturen im Bild der Messkamera die Eigenlage der bildaufnehmenden Kamera zu ermitteln. Erfindungsgemäß ist vorgesehen, dass die bildaufnehmende Kamera und die Messkamera dabei so ausgerichtet sind, dass sie wenigstens teilweise einen gemeinsamen Ausschnitt der Umgebung aufnehmen können, innerhalb der sich Strukturen befinden, die von den beiden Kameras jeweils in ihrem Bild optisch erfassbar sind. Die beiden Kameras können somit wenigstens ausschnittsweise das gleiche Bild und damit auch die gleichen optisch erfassbaren Strukturen sehen.

Erfindungsgemäß steht die Messkamera ferner in Verbindung mit der Auswerteeinheit, welche dazu ausgebildet ist, die Eigenlage der bildaufnehmenden Kamera laufend wenigstens aus den Strukturen im Raum zu ermitteln, welche jeweils von der Messkamera in ihrem Bild erfasst werden. Verändert sich die Eigenlage der bildaufnehmenden Kamera bei einer Aufnahme, verändern sich auch die Positionen von optisch erfassbaren Strukturen im aktuellen Bild der Messkamera, woraus die sich verändernde Eigenlage der bildaufnehmenden Kamera berechnet werden kann. Die Auswerteeinheit ist ferner dazu ausgebildet, diese Strukturen wenigstens teilweise auch im Bild der bildaufnehmenden Kamera zu lokalisieren und die aus dem Bild der Messkamera ermittelte Eigenlage der bildaufnehmenden Kamera anhand der aus dem Bild der bildaufnehmenden Kamera ermittelten Position der Strukturen zu korrigieren.

Erfindungsgemäß ist weiterhin vorgesehen, dass die die Auswerteeinheit die ermittelte Eigenlage der Messkamera korrigiert, indem sie im Bild der Messkamera nach optisch erfassbaren Strukturen sucht, diese identifiziert und eine Schätzung der Position der erfassten Strukturen durchführt. Daraufhin berechnet die Auswerteeinheit im Bild der bildaufnehmenden Kamera eine wahrscheinliche Position der erfassten Strukturen, sucht sie an dieser wahrscheinlichen Position im Bild der bildaufnehmenden Kamera und ermittelt ihre tatsächliche Position im Bild der bildaufnehmenden Kamera. Die ermittelte tatsächliche Position der Strukturen im Bild der bildaufnehmenden Kamera wird dann von der Auswerteeinheit dazu verwendet, die Eigenlage der bildaufnehmenden Kamera erneut zu berechnen.

Die Auswerteeinheit sucht somit fortlaufend im Bild der bildaufnehmenden Kamera nach den Strukturen, die im aktuellen Bild der Messkamera erfasst wurden, um so die Bestimmung der Eigenlage der bildaufnehmenden Kamera zu korrigieren, wobei Parameter der Eigenlage wie der Schwenk-, Neige- und/oder Rollwinkel genauer bestimmt werden können. Die Erfindung strebt keine möglichst exakte physikalische Berechnung der Eigenlage der Messkamera bzw. der bildaufnehmenden Kamera im Raum an, sondern vielmehr die beste Übereinstimmung zwischen den realen und den virtuellen Bildern (best match). Dies wird durch Heranziehen des Bildes der bildaufnehmenden Kamera erreicht, da die virtuellen Elemente ja gerade in diesem Bild an den richtigen Stellen eingefügt werden müssen. Ob die Eigenlage der bildaufnehmenden Kamera im Raum daher exakt berechnet wurde oder nicht, ist unerheblich, solange die virtuellen Elemente an den richtigen Positionen auf realen Markern liegen. Um dies zu erreichen, wird die Bestimmung der Eigenlage der bildaufnehmenden Kamera entsprechend verfeinert, d.h. sie wird so ermittelt, dass eine möglichst gute Übereinstimmung zwischen den realen und den virtuellen Bildern vorliegt.

Dabei kann die Auswerteeinheit dazu ausgebildet sein, zuerst die Eigenlage der Messkamera zu bestimmen, wobei auch hier Parameter dieser Eigenlage wie der Schwenk-, Neige- und/oder Rollwinkel ermittelt werden. Aus der bekannten Lage der Messkamera relativ zur bildaufnehmenden Kamera kann dann die aktuelle Eigenlage der bildaufnehmenden Kamera bestimmt werden. Allerdings muss dies nicht schrittweise erfolgen, sondern von der Erfindung umfasst sind auch Ausführungsformen, bei denen die Parameter der Eigenlage der bildaufnehmenden Kamera über einen entsprechenden Algorithmus direkt aus den im Bild der Messkamera erfassten Strukturen berechnet werden können.

Das Grundprinzip der Erfindung sieht somit vor, die veränderliche Eigenlage der bildaufnehmenden Kamera im Raum indirekt über die Bestimmung der Eigenlage der zusätzlichen Messkamera durchzuführen, da die feste Lage der Messkamera in Bezug zur bildaufnehmenden Kamera bekannt ist und sich bei einer Bewegung der bildaufnehmenden Kamera bei Aufnahmen nicht verändert. Die veränderliche Eigenlage der Messkamera im Raum wiederum wird fortlaufend aus deren Bild bestimmt, wobei das Bild der bildaufnehmenden Kamera vorzugsweise ebenfalls fortlaufend dazu genutzt wird, Parameter der Eigenlage zu korrigieren. Zuerst werden diese Parameter somit anhand des Bildes der Messkamera bestimmt, aber sobald das Bild der bildaufnehmenden Kamera von der Auswerteeinheit hinzugezogen wird, können die Parameter genauer bestimmt und gegebenenfalls nachkorrigiert werden. Hierdurch kann eine genauere Bestimmung der Eigenlage der bildaufnehmenden Kamera erreicht werden, als es nur mit dem Bild der Messkamera möglich wäre. Dies wirkt sich wiederum positiv auf die Qualität des Matching der realen mit den virtuellen Bildern aus.

Dabei kann diese Nachjustierung einzelne oder alle Parameter betreffen, und der Nachjustierung liegt ein Abgleich der Bildschirmpositionen der virtuellen Objekte, die durch die gemessenen Werte der Messkamera berechnet wurden, mit den tatsächlichen Bildschirmkoordinaten der Marker im Bilder der bildaufnehmenden Kamera zugrunde. Wenn diese Bildschirmpositionen voneinander abweichen, werden die einzelnen Parameter solange verändert, bis beide Bildlagen übereinstimmen.

Gegenüber Lösungen wie beispielsweise die der EP 1 594 322 A2 hat die Erfindung insbesondere den Vorteil, dass eine zusätzliche Kamera mit großem Öffnungswinkel nicht zur Erstellung von Referenzbildern genutzt wird, mit denen das Bild der bildaufnehmenden Kamera lediglich verglichen wird, um daraus die Eigenlage der bildaufnehmenden Kamera zu bestimmen, sondern die zusätzliche Kamera wird direkt dazu genutzt, um die Eigenlage der Kamera zu bestimmen. Bei der Erfindung ist der Aufwand für die Installation und somit die Vorbereitung einer Aufnahme somit erheblich geringer. Ferner wird nicht versucht, die gesamte Szene, die von der bildaufnehmenden Kamera aufgenommen wird, in den Referenzbildern zu finden, sondern im Extremfall wird im Bild der bildaufnehmenden Kamera nach nur einem Punkt gesucht. Dies ermöglicht eine schnellere Berechnung und erfordert geringere Rechnerleistung zur Durchführung der Berechnung.

Darüber hinaus wird die Qualität des Matching der realen mit den virtuellen Bildern bei der Erfindung je nach Art der verwendeten optisch erfassbaren Strukturen auch besser sein als bei diesem bekannten Verfahren. Insbesondere bei Verwendung von vordefinierten Mustern im Raum ist dies der Fall, da das bekannte Verfahren nur anhand der natürlichen Szene eine Abschätzung durchführt und daraus das bestmögliche Ergebnis berechnet. Ferner wird erfindungsgemäß nicht versucht, mit der bildaufnehmenden Kamera den gleichen Prozess wie mit einer Messkamera durchzuführen, sondern der Prozess der Messkamera wird nur verfeinert. Insbesondere bei stark heran gezoomten Aufnahmen (lange Brennweite, kleiner Öffnungswinkel) werden die Vorteile der erfindungsgemäßen Vorgehensweise dann besonders deutlich.

Vorzugsweise hat die Auswerteeinheit dabei Zugriff auf gespeicherte Informationen bezüglich der Position der optisch erfassbaren Strukturen innerhalb des Raumes und ist dazu ausgebildet, wenigstens aus der jeweils bekannten Position der Strukturen im Raum, welche von der Messkamera in ihrem Bild erfasst werden, indirekt auch die Eigenlage der bildaufnehmenden Kamera zu ermitteln. Diese Informationen bezüglich der Position der optisch erfassbaren Strukturen innerhalb des Raumes können einmalig vor der Installation ermittelt werden, wodurch ihre dreidimensionalen Koordinaten bekannt sind. Die Messkamera sieht dann die optischen Strukturen in ihrem Bild und die Auswerteeinheit kann einzelne Strukturen identifizieren und den bekannten Koordinaten zuordnen. Hieraus lässt sich zunächst die Eigenlage der Messkamera berechnen. Aus der bekannten Lage der Messkamera relativ zur bildaufnehmenden Kamera kann dann indirekt auch auf die Eigenlage der bildaufnehmenden Kamera im Raum geschlossen werden.

Die dreidimensionalen Koordinaten von optisch erfassbaren Strukturen im Raum müssen jedoch nicht zwingend vor der Installation ermittelt werden, sondern es können auch Verfahren eingesetzt werden, welche diese in einer unbekannten Szene aus einer Abfolge von Bildern berechnen.

Die so ermittelte Eigenlage der bildaufnehmenden Kamera kann dann dazu genutzt werden, die realen Bilder der Kamera an bestimmten Stellen des aufgenommenen Raumes genau durch diejenigen virtuellen Bilder zu überlagern, die der Sicht der Kamera auf diese Stellen entsprechen. Dazu kann als Mischtechnik beispielsweise ein Chromakey- und/oder Matting-Verfahren eingesetzt werden.

Zur Bestimmung der Lage der Messkamera aus in ihrem Bild optisch erfassten Strukturen können verschiedene geeignete Verfahren eingesetzt werden, die dem Fachmann bekannt sind und an dieser Stelle nicht im Detail erläutert werden. Besonders einfach können solche Verfahren jedoch durchgeführt werden, wenn die verwendete Messkamera eine feste Brennweite besitzt, die beispielsweise vorab durch eine gesonderte Kalibrierung bzw. Vermessung bestimmt werden kann. In einem Ausführungsbeispiel der Erfindung hat die Messkamera daher eine feste Brennweite und vorzugsweise einen größeren Öffnungswinkel als die bildaufnehmende Kamera.

Beispielsweise kann der Öffnungswinkel der Messkamera in der Größenordnung von 80 bis 180 Grad liegen, wobei es sich um den horizontalen Öffnungswinkel (Field of View - FoV) handelt, unter dem die Messkamera die Szene sieht, d.h. der Ausschnitt aus dem Gesamtsystem. Da die Objektive im Film- und Fernsehbereich üblicherweise zwischen 55 und 90 Grad liegen, sollte die Messkamera einen mindestens so großen Öffnungswinkel aufweisen. Typische Objektive können um die 90 Grad Öffnungswinkel besitzen, aber einsetzbar wäre auch sogenannte FishEyes mit Öffnungswinkeln von 120, 160 oder sogar 180 Grad. Auch Objektive, die über einen Kegelspiegel die gesamten 360 Grad abdecken, könnten benutzt werden.

Durch den großen Öffnungswinkel der Messkamera kann diese viel von der Szene im Raum und auch trotz eventueller Verdeckungen noch genügend Strukturen sehen. Durch den kleineren Öffnungswinkel der bildaufnehmenden Kamera sieht die bildaufnehmende Kamera einen kleineren Ausschnitt der Szene als die Messkamera, wobei der gemeinsame Ausschnitt, den beide Kameras sehen, dann dem Bild der bildaufnehmenden Kamera entsprechen kann. Beispielsweise könnte der Zoom bei weitwinkligen Zoomobjektiven zwischen 10 und 90 Grad oder bei normalbrennweitigen Zoomobjektiven zwischen 1 und 60 Grad einstellbar sein. Bei fester Brennweite können Öffnungswinkel von 0,2 bis 120 Grad vorkommen.

Durch den größeren Öffnungswinkel der Messkamera ist deren Ortsauflösung jedoch schlechter, d.h. die Anzahl der Pixel der Messkamera pro Meter im Raum ist geringer, was ohne die erfindungsgemäße Vorgehensweise zur Glättung bzw. Neuberechnung zu stark verrauschten Berechnungen führt. Die Ortsauflösung der bildaufnehmenden Kamera ist dagegen höher.

Die Messkamera liefert somit aufgrund ihres großen Öffnungswinkels immer genügend Punkte zur Berechnung aller Parameter, während die bildaufnehmende Kamera weniger Messpunkte sieht, aber dafür eine bessere Auflösung besitzt und das Bild der Messkamera wenigstens bereichsweise verfeinern bzw. einzelne Parameter genauer bestimmen kann. Die bildaufnehmende Kamera hat vorzugsweise eine feste oder veränderliche Brennweite, wobei insbesondere im Fernsehbereich für die bildaufnehmende Kamera sehr große Öffnungswinkel im Bereich von 0,5 bis 70 Grad verwendet werden, um möglichst sehr nahe an Objekte heran zoomen zu können. Je länger die Brennweite, d.h. je kleiner der Öffnungswinkel der bildaufnehmenden Kamera ist, desto eher wird ein Rauschen oder eine ungenaue Berechnung des Ortes der virtuellen Bilder sichtbar.

Insbesondere wenn die bildaufnehmende Kamera eine veränderliche Brennweite hat, ist das Zoomobjektiv der bildaufnehmenden Kamera vorzugsweise so kalibriert, dass alle möglichen Öffnungswinkel über den gesamten Einstellbereich des Zooms und des Fokus bekannt sind, wobei die Auswerteeinheit Zugriff auf Informationen bezüglich der gespeicherten Öffnungswinkel hat.

Die Ermittlung der Eigenlage der Messkamera und damit der bildaufnehmenden Kamera kann erfindungsgemäß korrigiert werden, indem das Bild der bildaufnehmenden Kamera herangezogen wird, das wenigstens teilweise den gleichen Ausschnitt des Raumes sieht wie die Messkamera. Die grobe Lage von optisch erfassbaren Strukturen ist bereits aus dem Bild der Messkamera bekannt und diese Strukturen können nun im hochaufgelösten Bild der bildaufnehmenden Kamera gesucht werden, um hieraus die berechnete Lage der bildaufnehmende Kamera genauer zu bestimmen. Mit dieser Information wird das Ergebnis der Berechnung zur Eigenlage der Messkamera geglättet oder zum Teil oder vollständig neu berechnet, um hieraus erneut die Eigenlage der bildaufnehmenden Kamera zu bestimmen.

Da die jeweils gewählte Mischtechnik (das Compositing) anschließend mit dem Bild der bildaufnehmenden Kamera durchgeführt wird, darf in ihrem Bild kein Rauschen oder Wackeln der überlagerten virtuellen Elemente sichtbar sein. Um dies zu verhindern, müsste die Auflösung der Messkamera daher eigentlich genauso gut sein wie die Auflösung der bildaufnehmenden Kamera. Wenn die bildaufnehmende Kamera herein zoomt, werden die realen Objekte stärker vergrößert und die Messkamera müsste eigentlich auch bessere Daten liefern. Die Qualität der Messkamera bleibt jedoch immer gleich.

Der erfindungsgemäße Ansatz der Verwendung des Bildes der bildaufnehmenden Kamera zum Korrigieren von Parametern der ermittelten Eigenlage hat dabei den Vorteil, dass die Ortsauflösung dieses Bildes immer besser wird, je stärker die bildaufnehmende Kamera herein zoomt. Die Qualität der Glättung oder Neuberechnung durch die bildaufnehmende Kamera passt sich so also immer der benötigten Auflösung an, und die Auflösung des Bildes der bildaufnehmenden Kamera in Pixeln ist genau die Auflösung, die für den Mischeffekt des Chromakey-Verfahrens benötigt wird. Die Genauigkeit des Gesamtsystems ist somit skalierbar und immer so gut, wie es der Mischeffekt erfordert.

Nur die Auflösung der bildaufnehmenden Kamera ist dabei ausschlaggebend für die Mischung der realen Bilder mit den virtuellen Bildern, denn nur hier soll das Bild im Ergebnis gut aussehen. Letztendlich soll im Bild der bildaufnehmenden Kamera ein virtuelles Element wie ein Objekt oder eine Szene eingefügt werden, so dass das virtuelle Element pixelgenau zum realen Bild passen muss.

Die Strukturen im Bild der bildaufnehmenden Kamera besitzen aber immer die richtige Lage im Bild, so dass sie optimal zur Verbesserung der Lageberechnung verwendet werden können. Allerdings können immer nur wenige Strukturen gesehen werden, so dass der erfindungsgemäße Ansatz vorteilhaft ist, die bildaufnehmende Kamera in die Messung durch eine Messkamera einzubinden. Die Messkamera führt eine ständige Lageberechnung durch, die zwar relativ ungenau ist, aber dafür immer ausreichend viele Messpunkte zur Verfügung hat. Die bildaufnehmende Kamera sieht immer nur sehr wenige Messpunkte, so dass eine ständige Lageberechnung aus diesen Punkten nicht verlässlich wäre, aber die wenigen gesehenen Punkte können gut zur Verbesserung der Berechnung der Eigenlage der Messkamera und damit indirekt auch der bildaufnehmenden Kamera genutzt werden, da diese ein sehr hoch aufgelöstes Bild liefert.

Dabei müssen die Strukturen (Messpunkte) jedoch nicht zuerst im Bild der bildaufnehmenden Kamera identifiziert werden, wie es bei anderen Verfahren der Fall ist, bei denen die Eigenlage direkt aus dem Bild der bildaufnehmenden Kamera bestimmt wird, denn dies führt bei wenigen sichtbaren Messpunkten im Bild der bildaufnehmenden Kamera zu ungenauen Berechnungen. Die Identifikation der Messpunkte ist vielmehr bereits durch die Messkamera bekannt, so dass diese gezielt im Bild der bildaufnehmenden Kamera gesucht werden können. Selbst wenn das Bild der bildaufnehmenden Kamera keine Messpunkte liefert, da beispielsweise alle Messpunkte verdeckt oder unscharf sind, kann die Messkamera noch Daten für eine Bestimmung der Eigenlage der beiden Kameras bereitstellen.

Als Mischtechnik können beispielsweise Chromakey-Verfahren und/oder Matting-Verfahren zum Einsatz kommen. Beim Chromakey-Verfahren werden virtuelle Objekte/Bilder an denjenigen Stellen eingefügt, die in der Szene blau oder grün eingefärbt sind, während die virtuellen Objekte/Bilder beim Matting-Verfahren über das reale Bild gelegt werden.

Bei den optisch erfassbaren Strukturen innerhalb einer Umgebung kann es sich um verschiedene Elemente handeln. Beispielsweise können optisch erfassbare Strukturen definiert angebrachte Markierungen sein, die durch Farbe, Helligkeit und/oder Form charakterisiert sind. Diese Arten von Markierungen werden dann gezielt an bestimmten Positionen angeordnet, wobei die Erfindung innerhalb eines Raumes, aber auch in freier Umgebung eingesetzt werden kann.

Eine Charakterisierung der Strukturen durch ihre Farbe kann beispielsweise gegeben sein, wenn sich bestimmten Markierungen durch ihre Farbe von einem grünen oder blauen Untergrund eines virtuellen Studios abheben. Sie können sich aber auch durch ihre Form von einem Untergrund abheben, wobei die Form variieren kann und in beiden Varianten beispielsweise kreisrunde, elliptische, eckige und/oder linienförmige Strukturen verwendet werden können. Dabei können die Markierungen beliebig oder in definierten Mustern angeordnet sein.

Ergänzend oder alternativ zu den definiert angebrachten Markierungen können optisch erfassbare Strukturen auch durch natürlich vorhandene Teile der Umgebung bzw. eines Raumes gebildet werden. Beispielsweise kann es sich hierbei um beliebige Kanten und/oder Schnittpunkte von Kanten handeln, die insbesondere durch Einbauten oder Möbel innerhalb eines Raumes entstehen. In der freien Umgebung entstehen solche Kanten und/oder Schnittpunkte beispielsweise durch Häuser, Straßen oder sogar Landschaften. Es handelt sich bei den optisch erfassbaren Strukturen also generell um markante Punkte, aus deren Lage innerhalb eines Bildes auf die Raumlage der jeweiligen Kamera geschlossen werden kann.

Von der Erfindung umfasst ist ferner ein Verfahren zur Bestimmung der Eigenlage einer bildaufnehmenden Kamera innerhalb einer Umgebung, in dem Strukturen optisch erfassbar sind, wobei eine Auswerteeinheit wenigstens aus Strukturen im Bild einer Messkamera, die fest in einer bekannten relativen Lage zu der bildaufnehmenden Kamera montiert ist, die Eigenlage der bildaufnehmenden Kamera berechnet. Erfindungsgemäß werden die bildaufnehmende Kamera und die Messkamera dazu so ausgerichtet, dass sie wenigstens teilweise einen gemeinsamen Ausschnitt der Umgebung aufnehmen, innerhalb der sich Strukturen befinden, die von den beiden Kameras jeweils in einem Bild optisch erfasst werden. Die Messkamera übermittelt dann Daten bezüglich ihres Bildes an die Auswerteeinheit, welche wenigstens aus den Strukturen in der Umgebung, welche von der Messkamera in ihrem Bild erfasst werden, die Eigenlage der bildaufnehmenden Kamera ermittelt. Dabei lokalisiert die Auswerteeinheit diese Strukturen wenigstens teilweise auch im Bild der bildaufnehmenden Kamera und korrigiert die aus dem Bild der Messkamera ermittelte Eigenlage der bildaufnehmenden Kamera anhand der aus dem Bild der bildaufnehmenden Kamera ermittelten Position der Strukturen.

Auch bei dem Verfahren berechnet die Auswerteeinheit die Eigenlage der bildaufnehmenden Kamera, indem sie auf gespeicherte Informationen bezüglich der Position der Strukturen zugreift, die im Bild der Messkamera erfasst werden. Erfindungsgemäß ist vorgesehen, dass die Auswerteeinheit die ermittelte Eigenlage der Messkamera korrigiert, indem sie im Bild der Messkamera nach optisch erfassbaren Strukturen sucht, diese identifiziert und eine Schätzung der Position der erfassten Strukturen durchführt. Daraufhin berechnet die Auswerteeinheit im Bild der bildaufnehmenden Kamera eine wahrscheinliche Position der erfassten Strukturen, sucht sie an dieser wahrscheinlichen Position im Bild der bildaufnehmenden Kamera und ermittelt ihre tatsächliche Position im Bild der bildaufnehmenden Kamera. Die ermittelte tatsächliche Position der Strukturen im Bild der bildaufnehmenden Kamera wird dann von der Auswerteeinheit dazu verwendet, die Eigenlage der bildaufnehmenden Kamera erneut zu berechnen.

Hierbei handelt es sich um ein Verfahren, das bei Aufnahmen mit der bildaufnehmenden Kamera fortlaufend durchgeführt wird, um die Eigenlage der bildaufnehmenden Kamera auch fortlaufend berechnen zu können. Bei einer Änderung der Eigenlage der bildaufnehmenden Kamera ergibt sich somit ein geändertes Bild der Messkamera, da sich diese analog mit bewegt. Die in diesem Bild erfassten Strukturen werden fortlaufend auch im Bild der bildaufnehmenden Kamera gesucht und mit der so ermittelten genaueren Lage der Strukturen im Bild der bildaufnehmenden Kamera kann die Bestimmung der Eigenlage der Messkamera und damit indirekt auch der bildaufnehmenden Kamera fortlaufend korrigiert werden.

Das Verfahren wird dabei vorzugsweise in Echtzeit durchgeführt, d.h. es werden nicht erst die Videobilder der Kameras aufgezeichnet und dann als Gesamtheit der Berechnung zugeführt, sondern nach jedem einzelnen Videobild wird die komplette Berechnung durchgeführt und das Ergebnis der Eigenlage berechnet. Dies dauert in etwa 10ms und ist insbesondere für die Anwendung der Erfindung im Fernsehbereich vorteilhaft, da hier virtuelle Objekte zu jedem Bild live berechnet und eingefügt werden müssen. Im Fernsehen werden derzeit entweder 50 oder annähernd 60 Halbbilder verwendet, so dass innerhalb von 20 bzw. 16,6ms das Ergebnis der Berechnung zur Verfügung stehen sollte, was mit der Erfindung möglich ist. Die verwendete Messkamera muss dabei mit der entsprechenden Frequenz arbeiten und der Algorithmus schnell genug sein.

Dabei kann vorgesehen sein, dass die Auswerteeinheit das Bild der Messkamera anhand der aus dem Bild der bildaufnehmenden Kamera ermittelten Position der Strukturen glättet oder neu berechnet. Die Auswerteeinheit kann das Bild der Messkamera beispielsweise glätten oder verbessern, indem sie die ermittelte tatsächliche Position der Strukturen im Bild der bildaufnehmenden Kamera dazu verwendet, die Position der Strukturen im Bild der Messkamera erneut zu berechnen.

Zweckmäßigerweise wird die feste Lage der Messkamera relativ zur bildaufnehmenden Kamera vor der Bestimmung der Eigenlage der bildaufnehmenden Kamera kalibriert. Dies kann beispielsweise dadurch erfolgen, dass bei der Kalibrierung beide Kameras das gleiche Bild mit den gleichen Strukturen im Raum aufnehmen. In einem Ausführungsbeispiel der Erfindung nehmen beide Kameras mehr als einmal das gleiche Bild mit den gleichen Strukturen im Raum auf, ohne dass die Kameras dabei bewegt werden. Ein mittleres Ergebnis der Berechnung kann dann dazu genutzt wird, die Lage der Messkamera relativ zur bildaufnehmenden Kamera zu bestimmen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung eines Ausführungsbeispiels der erfindungsgemäßen Vorrichtung innerhalb eines Raumes; und
- Fig. 2: einen Vergleich der optisch erfassbaren Strukturen innerhalb der Bilder der bildaufnehmenden Kamera und der Messkamera.

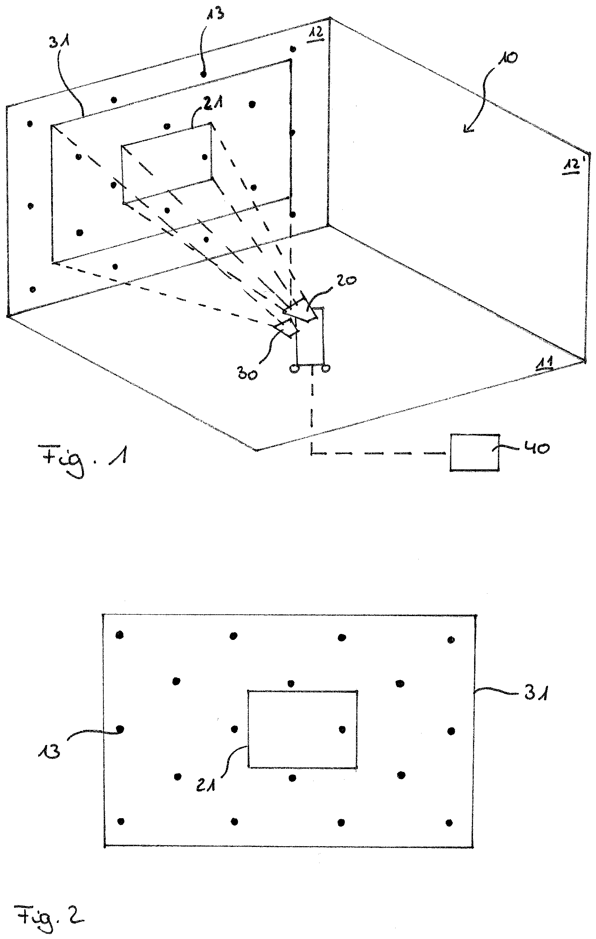

In Fig. 1 ist schematisch ein Raum 10 dargestellt, innerhalb dessen sich eine bildaufnehmende Kamera 20 befindet, die Bilder des Raumes 10 aufnimmt. Bei der bildaufnehmenden Kamera 20 handelt es sich um die Kamera, deren reale Bilder einer Szene innerhalb des Raumes 10 bei Durchführung beispielsweise eines Chromakey-Verfahrens mit virtuellen Bildern überlagert werden. Diese Kamera kann auch als bildführende Kamera bezeichnet werden.

Der zugehörige Raum 10 kann insbesondere ein virtuelles Fernsehstudio sein, das aufgrund seiner Farbgebung für die Durchführung eines Chromakey-Verfahrens geeignet ist. Die Erfindung ist jedoch nicht auf die Anwendung in Fernsehstudios beschränkt, sondern kann beispielsweise auch in Filmstudios oder sonstigen Umgebungen eingesetzt werden. Auch eine Anwendung im Freien ist somit möglich, so dass der Begriff "Raum" im Sinne dieser Erfindung nicht auf geschlossene Räume beispielsweise in Gebäuden beschränkt ist. Im Freien werden dann für eine Berechnung der Lage einer Kamera vorzugsweise die natürlichen Strukturen der Umgebung genutzt, die optisch erfassbar sind.

Der Raum hat eine Bodenfläche 11 und mehrere Seitenwände, wobei in der schematischen Ansicht der Fig. 1 lediglich zwei hintere Seitenwände 12 und 12' dargestellt sind. Die Wände und der Boden des Studios können blau oder grün gestrichen sein, damit die jeweilige Farbe in diesen Bereichen gegen virtuelle Bilder ausgetauscht werden kann.

Die bildaufnehmende Kamera 20 ist beispielsweise auf eine hintere Seitenwand 12 gerichtet und nimmt so ein Bild 21 der Seitenwand und der davor befindlichen Körper auf, die jedoch zur Vereinfachung der Darstellung in Fig. 1 nicht gezeigt sind. Die bildaufnehmende Kamera 20 kann dabei wenigstens um die vertikale Z-Achse drehbar sein, was einem horizontalen Schwenk entspricht (pan). Sie kann ferner um eine horizontale Achse geneigt werden, was einem vertikalen Schwenk entspricht (tilt). Auch eine Drehung um die optische Achse kann möglich sein (roll).

Die Kamera 20 kann ferner zumindest in horizontaler x- und y-Richtung fest im Raum 10 montiert sein, vorzugsweise ist sie jedoch auch in diesen Achsen beweglich ausgeführt, denn insbesondere bei einer frei im Raum 10 beweglichen Kamera ist die Bestimmung der jeweiligen Position und Orientierung wesentlich für das verwendete Chromakey-Verfahren, bei dem die von der bildaufnehmenden Kamera 20 aufgenommenen Bilder mit virtuellen Bildern überlagert werden. Die Erfindung kann jedoch auch bei Kameras eingesetzt werden, die nicht in allen Achsen beweglich im Raum ausgeführt sind.

An der bildaufnehmenden Kamera 20 ist eine Messkamera 30 angebracht, deren Lage relativ zur bildaufnehmenden Kamera 20 fest und somit bekannt ist. Dabei kann die Messkamera 30 direkt mit der bildaufnehmenden Kamera 20 verbunden sein, oder beide Kameras sind an einer gemeinsamen Halteeinrichtung montiert. Die Messkamera 30 ist dabei vorzugsweise unterhalb oder neben der bildaufnehmenden Kamera 20 und sehr nahe an dieser angebracht, wobei sie jede Bewegung der bildaufnehmenden Kamera 20 mitmacht.

Beide Kameras 20, 30 sind erfindungsgemäß so ausgerichtet, dass sie wenigstens teilweise einen gemeinsamen Ausschnitt des Raumes 10 aufnehmen können. In dem dargestellten Ausführungsbeispiel ist die Messkamera 30 somit ebenfalls auf die hintere Seitenwand 12 gerichtet und nimmt ein Bild 31 dieser Wand zusammen mit davor befindlichen Körpern auf (nicht dargestellt). Dabei ist der Öffnungswinkel der Messkamera 30 größer als der Öffnungswinkel der bildaufnehmenden Kamera 20, so dass das Bild 21 der bildaufnehmenden Kamera 20 lediglich einen Ausschnitt aus dem Bild 31 der Messkamera 30 darstellt.

Innerhalb des Raumes 10 sind Strukturen vorhanden, die optisch von beiden Kameras 20, 30 erfassbar sind. Dabei kann es sich um jegliche Strukturen handeln, die durch ihre Form- und/oder Farbgebung optisch im Bild der Kameras 20, 30 erfassbar sind. Beispielsweise können wenigstens an den Seitenwänden 12, 12', aber auch auf dem Boden 11 oder an einer nicht dargestellten Decke Markierungen 13 angebracht sein, die beliebig verteilt sind oder vordefinierte Muster bilden. Aber auch dreidimensionale Formen wie Ecken und Kanten von Objekten können als Strukturen im Sinne dieser Erfindung angesehen werden, da auch aus diesen die Position und Orientierung von Kameras ermittelt werden kann. Dabei kann es sich in beiden Fällen um speziell angebrachte Markierungen oder um natürliche Objekte handeln, die im Raum 10 ohnehin vorhanden wären.

Um die Lage der Messkamera 30 in Bezug zur bildaufnehmenden Kamera 20 bestimmen zu können, nachdem die Messkamera 30 an der bildaufnehmenden Kamera 20 befestigt wurde, kann eine Kalibrierung/Vermes-sung dieser Lage durchgeführt werden. Diese kann auf verschiedene Arten erfolgen, wobei sich insbesondere eine optische Kalibrierung als vorteilhaft erwiesen hat, bei der beide Kameras 20, 30 in Weitwinkelstellung das gleiche Muster sehen und hieraus mehrfach ihre Lage berechnet wird. Beispielsweise können etwa hundert Berechnungen durchgeführt werden, ohne dass die beiden Kameras 20, 30 in dieser Zeit bewegt werden. Ein mittleres Ergebnis der Lageberechnung kann dann dazu genutzt werden, die Lage der Messkamera 30 zur bildaufnehmenden Kamera 20 zu bestimmen.

In diese Kalibrierung fließen vorzugsweise auch die inneren bzw. optischen Parameter der Messkamera 30 ein, wobei es sich insbesondere um die Brennweite, die Verzeichnung (Distorsion), den Bildmittelpunkt, etc. handeln kann. Ferner werden die optischen Eigenschaften der bildaufnehmenden Kamera 20 ebenfalls kalibriert, was insbesondere die Brennweite, die Verzeichnung, den Mittelpunkt, etc. des Objektivs umfassen kann.

In dem in Fig. 1 dargestellten Ausführungsbeispiel handelt es sich bei den optisch erfassbaren Strukturen um Markierungen 13, die in einem bestimmten Muster wenigstens auf der Seitenwand 12 angebracht sind. In einer einfachen Form sind die Markierungen 13 kreisrund ausgeführt, und die dreidimensionalen Koordinaten jeder Markierung sind bekannt. Diese Koordinaten können einmalig bei der Installation der Vorrichtung vermessen werden, so dass jeder Markierung eine Identifikation (ID) und die zugehörigen dreidimensionalen Koordinaten zugeordnet werden können.

Diese Daten werden in einer Auswerteeinheit gespeichert, die an die Messkamera 30 und die bildaufnehmende Kamera 20 angeschlossen ist. In der Fig. 1 ist dies schematisch durch eine Komponente 40 dargestellt, die sich abseits der Kamera 20, 30 befindet und auch das Chromakey-Verfahren zur Erzeugung des resultierenden Endbildes durchführen kann, das aus dem realen Bild und den überlagerten virtuellen Elementen besteht.

Die beispielhaft gewählten Markierungen 13 bilden dabei beispielsweise mehrere Reihen aus versetzt zueinander angeordneten Punkten, aber es können auch aufwendiger codierte Muster eingesetzt werden. Beispielsweise können mehrere Punkte zu einem Cluster vereinigt werden, der dann anhand eines hervorgehobenen Merkmals identifizierbar ist. Ferner können auch andere Formen von Markierungen wie Rechtecke, konzentrische Kreise, sich kreuzende Linien, etc. verwendet werden.

Im Bild 31 der Messkamera 30 erscheinen mehrere dieser Markierungen 13, deren Koordinaten bekannt sind, woraus die an die Messkamera 30 angeschlossene Auswerteeinheit 40 die Eigenlage der Messkamera 30 berechnen kann. Dabei sieht die Messkamera 30 die Markierungen 13 und die Auswerteeinheit 40 identifiziert sie und ordnet sie den bekannten Koordinaten zu, wodurch die Markierungen 13 auch als Messpunkte bezeichnet werden können. Aus den identifizierten Messpunkten 13 lässt sich dann die Eigenlage der Messkamera 30 berechnen, was Parameter für ihre Position im Raum (x-, y- und z-Achse) und ihre Orientierung (Schwenk-, Neige- und Rollwinkel) beinhalten kann, denn die 2D-Bildschirmkoordinaten korrespondieren mit einer 3D-Raumlage der Messkamera 30. Da die Lage der Messkamera 30 relativ zur bildaufnehmenden Kamera 20 fest und bekannt ist, kann aus der Eigenlage der Messkamera 30 die Eigenlage der bildaufnehmenden Kamera 20 berechnet werden.

Fig. 2 zeigt die beiden Bilder 21 und 31 der bildaufnehmenden Kamera 20 und der Messkamera 30, wobei das Bild 21 der bildaufnehmenden Kamera 20 aufgrund ihres geringeren Öffnungswinkels kleiner ist als das Bild 31 der Messkamera 30. Das Bild 21 der bildaufnehmenden Kamera 20 stellt also den gemeinsamen Ausschnitt des Raumes 10 dar, den die Kameras 20, 30 aufgrund ihrer Ausrichtung beide sehen, wobei innerhalb des Bildes 31 des Messkamera 30 weniger Messpunkte 13 zu sehen sind als im Bild 21 der bildaufnehmenden Kamera 20.

Aus den identifizierten Messpunkten im größeren Bild 31 der Messkamera 30 kann die Lage der Messkamera 30 in einer ersten Schätzung berechnet werden, was durch die Information ergänzt werden kann, wie die Messkamera 30 in Bezug zur bildaufnehmenden Kamera 20 angeordnet ist. Hieraus kann bereits eine erste Schätzung für die Eigenlage der bildaufnehmenden Kamera 20 im Raum 10 berechnet werden. Dabei liefert die Messkamera 30 aufgrund ihres großen Öffnungswinkels immer genügend Messpunkte, um alle Parameter berechnen zu können.

Die identifizierten Messpunkte im Bild 31 der Messkamera können nun dazu verwendet werden, diese wenigstens teilweise auch im höher aufgelösten Bild 21 der bildaufnehmenden Kamera 20 zu finden, indem eine theoretische Lage der Messpunkte in diesem Bild 21 berechnet wird. Dann wird im Bild 21 der bildaufnehmenden Kamera 20 in der Nähe dieser theoretischen Lagen ermittelt, ob sich die betreffenden Punkte wirklich dort befinden. Die so ermittelte Abweichung zwischen der Lage der Messpunkte im Bild 31 der Messkamera 30 und im schärferen Bild 21 der bildaufnehmenden Kamera 20 kann dazu genutzt werden, um eine Verbesserung der ersten Schätzung der Eigenlage der Messkamera 30 und damit der bildaufnehmenden Kamera 20 durchzuführen.

Selbst bei nur einem Messpunkt, der im Bild 21 der bildaufnehmenden Kamera 20 lokalisiert und dessen Lage durch diese Vorgehensweise genauer im Bild 31 der Messkamera 30 bestimmt werden kann, könnten bereits zwei Parameter nachjustiert werden, d.h. die erste Schätzung der Eigenlage der Messkamera 30 bzw. der bildaufnehmenden Kamera 20 im Raum 10 verbessert werden. Hierbei könnten beispielsweise ein horizontaler Schwenk der Kamera (pan) und ein vertikaler Schwenk der Kamera (tilt) genauer bestimmt werden. Auch wenn diese Parameter anschließend physikalisch immer noch nicht zu 100% richtig bzw. genau sind, sieht das Ergebnis im Endbild in jedem Fall besser aus, da die Punkte besser auf die tatsächlichen Positionen im Bild passen, d.h. sie "matchen" besser.

Sind im Bild 21 der bildaufnehmenden Kamera 20 bereits zwei Messpunkte sichtbar und ist ihre Lage genauer bestimmbar als durch das Bild 31 der Messkamera 30, kann zusätzlich auch eine Drehung um die optische Achse genauer bestimmt werden (roll). Auch die Brennweite, d.h. die Größe des Bildes bzw. der Abbildung, könnte genauer ermittelt werden.

Sind im Bild 21 der bildaufnehmenden Kamera 20 drei Messpunkte sichtbar und ist ihre Lage genauer bestimmbar als durch das Bild 31 der Messkamera 30, können zusätzlich beide Achsen senkrecht zur optischen Achse genauer bestimmt werden. Ab vier Messpunkten könnten alle Parameter nachkorrigiert werden.

Dabei kann das Bild der Messkamera 30 durch die zusätzlichen Informationen über die tatsächliche Position der Strukturen im Bild 21 der bildaufnehmenden Kamera 20 geglättet werden. Die Daten werden dadurch beruhigt und das Bild der Messkamera steht hierdurch ruhiger in Bezug zum Kamerabild. Mit dem geglätteten Bild der Messkamera 30 könnten dann erneut die Berechnungen für die Eigenlage durchgeführt werden. In einem Ausführungsbeispiel der Erfindung wird das Bild 21 der bildaufnehmenden Kamera 20 nicht nur zum Glätten des Bildes 31 der Messkamera 30 genutzt, sondern es kann in einem ersten Schritt auch direkt zur Lageberechnung herangezogen werden. Hierdurch kann ein stabileres 3D-Modell erstellt werden.

Ferner können in die Lageberechnung auch Daten aus anderen Quellen oder Berechnungsmethoden einfließen. Insbesondere können Inertialsensoren wie Gyroskope und Beschleunigungssensoren verwendet werden, um die Bestimmung der Eigenlage der Kameras zu verbessern. Diese Sensoren sind an der bildaufnehmenden Kamera 20 und der Messkamera 30 angebracht und registrieren die Bewegung der beiden Kameras 20, 30 anhand der jeweiligen Wirkmechanismen der Sensoren.

### Bezugszeichenliste:

- 10: Umgebung, Raum, Studio
- 11: Bodenfläche
- 12,12': Seitenwand
- 13: Struktur, Markierung, Muster, Messpunkt
- 20: Bildaufnehmende Kamera, Fernsehkamera
- 21: Bild der bildaufnehmenden Kamera, gemeinsamer Ausschnitt
- 30: Messkamera
- 31: Bild der Messkamera
- 40: Auswerteeinheit

## Patentansprüche

1. Vorrichtung zur Bestimmung der Eigenlage einer bildaufnehmenden Kamera (20) innerhalb einer Umgebung (10), in der Strukturen (13) optisch erfassbar sind, wobei die Vorrichtung wenigstens die bildaufnehmende Kamera (20), eine an dieser Kamera (20) fest in einer bekannten Lage montierte Messkamera (30) und eine Auswerteeinheit (40) umfasst, welche dazu ausgebildet ist, wenigstens aus den Strukturen (13) im Bild (31) der Messkamera (30) die Eigenlage der bildaufnehmenden Kamera (20) zu ermitteln, und die bildaufnehmende Kamera (20) und die Messkamera (30) so ausgerichtet sind, dass sie wenigstens teilweise einen gemeinsamen Ausschnitt (21) der Umgebung (10) aufnehmen können, innerhalb der sich Strukturen (13) befinden, die von den beiden Kameras (20;30) jeweils in ihrem Bild (21;31) optisch erfassbar sind, wobei die Messkamera (30) in Verbindung mit der Auswerteeinheit (40) steht, welche dazu ausgebildet ist, laufend die Eigenlage der bildaufnehmenden Kamera (20) wenigstens aus den Strukturen (13) in der Umgebung (10) zu ermitteln, welche jeweils von der Messkamera (30) erfasst werden,
**dadurch gekennzeichnet, dass**
die Auswerteeinheit (40) ferner dazu ausgebildet ist, diese Strukturen (13) wenigstens teilweise auch im Bild (21) der bildaufnehmenden Kamera (20) zu lokalisieren und die aus dem Bild (31) der Messkamera (30) ermittelte Eigenlage der bildaufnehmenden Kamera (20) anhand der aus dem Bild (21) der bildaufnehmenden Kamera (20) ermittelten Position der Strukturen (13) zu korrigieren, und die Auswerteeinheit (40) die ermittelte Eigenlage der bildaufnehmenden Kamera (20) korrigiert, indem sie im Bild (31) der Messkamera (30) nach optisch erfassbaren Strukturen (13) sucht, diese identifiziert und eine Schätzung der Position der erfassten Strukturen (13) durchführt, woraufhin die Auswerteeinheit (40) im Bild (21) der bildaufnehmenden Kamera (20) eine wahrscheinliche Position der erfassten Strukturen (13) berechnet, sie an dieser wahrscheinlichen Position im Bild (21) der bildaufnehmenden Kamera (20) sucht und ihre tatsächliche Position im Bild (21) der bildaufnehmenden Kamera (20) ermittelt, woraufhin die ermittelte tatsächliche Position der Strukturen (13) im Bild (21) der bildaufnehmenden Kamera (20) von der Auswerteeinheit (40) dazu verwendet wird, die Eigenlage der bildaufnehmenden Kamera (20) erneut zu berechnen.

2. Vorrichtung nach Anspruch 1,
**dadurch gekennzeichnet, dass** die Messkamera (30) eine feste Brennweite und einen größeren Öffnungswinkel als die bildaufnehmende Kamera (20) hat.

3. Vorrichtung nach einem oder beiden der Ansprüche 1 und 2,
**dadurch gekennzeichnet, dass** die bildaufnehmende Kamera (20) eine feste oder veränderliche Brennweite hat.

4. Vorrichtung nach Anspruch 3,
**dadurch gekennzeichnet, dass** die bildaufnehmende Kamera (20) eine veränderliche Brennweite hat und das Zoomobjektiv der bildaufnehmenden Kamera (20) so kalibriert ist, dass alle möglichen Öffnungswinkel über den gesamten Einstellbereich des Zooms und des Fokus bekannt sind, wobei die Auswerteeinheit (40) Zugriff auf Informationen bezüglich der gespeicherten Öffnungswinkel hat.

5. Vorrichtung nach einem oder mehreren der Ansprüche 1 bis 4,
**dadurch gekennzeichnet, dass** die optisch erfassbaren Strukturen (13) definiert in der Umgebung (10) angebrachte Markierungen sind, die durch Farbe, Helligkeit und/oder Form charakterisiert sind.

6. Vorrichtung nach Anspruch 5,
**dadurch gekennzeichnet, dass** Markierungen (13) in definierten Mustern angeordnet sind.

7. Vorrichtung nach einem oder mehreren der Ansprüche 1 bis 6,
**dadurch gekennzeichnet, dass** die optisch erfassbaren Strukturen (13) durch vorhandene Teile der Umgebung (10) gebildet werden.

8. Verfahren zur Bestimmung der Eigenlage einer bildaufnehmenden Kamera (20) innerhalb einer Umgebung (10), in der Strukturen (13) optisch erfassbar sind, wobei eine Auswerteeinheit (40) wenigstens aus Strukturen (13) im Bild (31) einer Messkamera (30), die fest in einer bekannten relativen Lage zu der bildaufnehmenden Kamera (20) montiert ist, die Eigenlage der bildaufnehmenden Kamera (20) berechnet, und die bildaufnehmende Kamera (20) und die Messkamera (30) so ausgerichtet werden, dass sie wenigstens teilweise einen gemeinsamen Ausschnitt (21) der Umgebung (10) aufnehmen, innerhalb der sich Strukturen (13) befinden, die von den beiden Kameras (20;30) jeweils in einem Bild (21;31) optisch erfasst werden, wobei die Messkamera (30) Daten bezüglich ihres Bildes (31) an die Auswerteeinheit (40) übermittelt, welche wenigstens aus den Strukturen (13), welche von der Messkamera (30) in ihrem Bild (31) erfasst werden, die Eigenlage der bildaufnehmenden Kamera (20) ermittelt,
**dadurch gekennzeichnet, dass**
die Auswerteeinheit (40) diese Strukturen (13) wenigstens teilweise auch im Bild (21) der bildaufnehmenden Kamera (20) lokalisiert und die aus dem Bild (31) der Messkamera (30) ermittelte Eigenlage der bildaufnehmenden Kamera (20) anhand der aus dem Bild (21) der bildaufnehmenden Kamera (20) ermittelten Position der Strukturen (13) korrigiert, wobei die Auswerteeinheit (40) die ermittelte Eigenlage der bildaufnehmenden Kamera (20) korrigiert, indem sie im Bild (31) der Messkamera (30) nach optisch erfassbaren Strukturen (13) sucht, diese identifiziert und eine Schätzung der Position der erfassten Strukturen (13) durchführt, woraufhin die Auswerteeinheit (40) im Bild (21) der bildaufnehmenden Kamera (20) eine wahrscheinliche Position der erfassten Strukturen (13) berechnet, sie an dieser wahrscheinlichen Position im Bild (21) der bildaufnehmenden Kamera (20) sucht und ihre tatsächliche Position im Bild (21) der bildaufnehmenden Kamera (20) ermittelt, woraufhin die ermittelte tatsächliche Position der Strukturen (13) im Bild (21) der bildaufnehmenden Kamera (20) von der Auswerteeinheit (40) dazu verwendet wird, die Eigenlage der bildaufnehmenden Kamera (20) erneut zu berechnen.

9. Verfahren nach Anspruch 8,
**dadurch gekennzeichnet, dass** die Auswerteeinheit (40) das Bild (31) der Messkamera (30) glättet, indem sie die ermittelte tatsächliche Position der Strukturen (13) im Bild (21) der bildaufnehmenden Kamera (20) dazu verwendet, die Position der Strukturen (13) im Bild (21) der Messkamera (20) erneut zu berechnen.

10. Verfahren nach einem oder mehreren der Ansprüche 8 oder 9,
**dadurch gekennzeichnet, dass** die feste Lage der Messkamera (30) relativ zur bildaufnehmenden Kamera (20) vor der Bestimmung der Eigenlage der bildaufnehmenden Kamera (20) kalibriert wird.

## Claims

1. A method for determining the own position of an image-recording camera (20) within an environment (10) in which structures (13) are optically detectable, wherein the device comprises at least the image-recording camera (20), a measuring camera (30) firmly mounted to this camera (20) in a known position and an evaluation unit (40), which is configured to determine the own position of the image-recording camera (20) at least from the structures (13) in the image (31) of the measuring camera (30), and the image-recording camera (20) and the measuring camera (30) are orientated in such a way that they are able to record at least partially a common section (21) of the environment (10) within which structures (13) are located that are optically detectable by both cameras (20; 30) in their images (21; 31), respectively, wherein the measuring camera (30) is in connection with the evaluation unit (40), which is configured to continuously determine the own position of the image-recording camera (20) at least from the structures (13) in the environment (10) that are respectively detected by the measuring camera (30),
**characterized in that**
wherein the evaluation unit (40) is further configured for locating these structures (13) at least partially also in the image (21) of the image-recording camera (20) and for correcting the own position of the image-recording camera (20), which is determined from the image (31) of the measuring camera (30), based on the position of the structures (13) determined from the image (21) of the image-recording camera (20), and the evaluation unit (40) corrects the determined own position of the image-recording camera (20) by searching, in the image (31) of the measuring camera (30), for optically detectable structures (13), identifies them and carries out an estimate of the position of the detected structures (13), whereupon the evaluation unit (40) calculates a probable position of the detected structures (13) in the image (21) of the image-recording camera (20), searches for them at that probable position in the image (21) of the image-recording camera (20), and determines their actual position in the image (21) of the image-recording camera (20), whereupon the determined actual position of the structures (13) in the image (21) of the image-recording camera (20) is used by the evaluation unit (40) for re-calculating the own position of the image-recording camera (20).

2. The device according to claim 1,
**characterized in that** the camera (30) has a fixed focal length and a larger aperture angle than the image-recording camera (20).

3. The device according to any one or both of the claims 1 and 2,
**characterized in that** the image-recording camera (20) has a fixed or changing focal length.

4. The device according to claim 3,
**characterized in that** the image-recording camera (20) has a changing focal length and the zoom lens of the image-recording camera (20) is calibrated in such a way that all possible aperture angles over the entire setting range of the zoom and the focus are known, with the evaluation unit (40) having access to information relating to the stored aperture angles.

5. The device according to any one or several of the claims 1 to 4,
**characterized in that** the optically detectable structures (13) are markings applied in a defined manner in the environment (10) that are **characterized by** color, brightness and/or shape.

6. The device according to claim 5,
**characterized in that** the markings (13) are arranged in defined patterns.

7. The device according to any one or several of the claims 1 to 6,
**characterized in that** the optically detectable structures (13) are formed by existing parts of the environment (10).

8. A method for determining the own position of an image-recording camera (20) within an environment (10) in which structures (13) are optically detectable, wherein an evaluation unit (40) calculates the own position of the image-recording camera (20) at least from structures (13) in the image (31) of a measuring camera (30) that is firmly mounted in a known relative position to the image-recording camera (20), and the image-recording camera (20) and the measuring camera (30) are orientated in such a way that they record at least partially a common section (21) of the environment (10) within which structures (13) are located that are optically detected by both cameras (20; 30) in one image (21; 31), respectively, wherein the measuring camera (30) transmits data relating to its image (31) to the evaluation unit (40), which determines the own position of the image-recording camera (20) at least from the structures (13) detected by the measuring camera (30) in its image (31),
**characterized in that**
the evaluation unit (40) locates these structures (13) at least partially also in the image (21) of the image-recording camera (20) and corrects the own position of the image-recording camera (20), which is determined from the image (31) of the measuring camera (30), based on the position of the structures (13) determined from the image (21) of the image-recording camera (20), wherein the evaluation unit (40) corrects the determined own position of the image-recording camera (20) by searching, in the image (31) of the measuring camera (30), for optically detectable structures (13), identifies them and carries out an estimate of the position of the detected structures (13), whereupon the evaluation unit (40) calculates a probable position of the detected structures (13) in the image (21) of the image-recording camera (20), searches for them at that probable position in the image (21) of the image-recording camera (20), and determines their actual position in the image (21) of the image-recording camera (20), whereupon the determined actual position of the structures (13) in the image (21) of the image-recording camera (20) is used by the evaluation unit (40) for re-calculating the own position of the image-recording camera (20).

9. The method according to claim 8,
**characterized in that** the evaluation unit (40) smoothens the image (31) of the measuring camera (30) by using the determined actual position of the structures (13) in the image (21) of the image-recording camera (20) for re-calculating the position of the structures (13) in the image (21) of the measuring camera (20).

10. The method according to any one or several of the claims 8 to 9,
**characterized in that** the fixed position of the measuring camera (30) relative to the image-recording camera (20) is calibrated prior to the determination of the own position of the image-recording camera (20).

## Revendications

1. Dispositif de détermination de la position propre d'une caméra de prise de vue (20) au sein d'un environnement (10) dans lequel des structures (13) peuvent être détectées optiquement, ledit dispositif comprenant au moins ladite caméra de prise de vue (20), une caméra de mesure (30) qui est solidarisée dans une position connue à cette caméra (20), et une unité d'évaluation (40) qui est conçue pour déterminer la position propre de la caméra de prise de vue (20) au moins à partir des structures (13) dans l'image (31) de la caméra de mesure (30), et ladite caméra de prise de vue (20) et la caméra de mesure (30) sont orientées de manière à ce qu'elles puissent enregistrer au moins en partie un détail commun (21) de l'environnement (10) dans lequel se trouvent des structures (13) qui peuvent être détectées optiquement par les deux caméras (20; 30) respectivement dans leur image (21; 31), dans lequel la caméra de mesure (30) est en communication avec l'unité d'évaluation (40) qui est conçue pour déterminer en continue la position propre de la caméra de prise de vue (20) au moins à partir des structures (13) dans l'environnement (10) qui sont détectées chacune par la caméra de mesure (30),
**caractérisé par le fait que**
ladite unité d'évaluation (40) est conçue en outre pour localiser ces structures (13) au moins en partie également dans l'image (21) de la caméra de prise de vue (20) et pour corriger la position propre de la caméra de prise de vue (20) déterminée à partir de l'image (31) de la caméra de mesure (30), sur la base de la position des structures (13) déterminée à partir de l'image (21) de la caméra de prise de vue (20), et ladite unité d'évaluation (40) corrige la position propre déterminée de la caméra de prise de vue (20) en cherchant dans l'image (31) de la caméra de mesure (30) des structures (13) détectables optiquement, identifie celles-ci et effectue une estimation de la position des structures (13) détectées, ce après quoi l'unité d'évaluation (40) calcule dans l'image (21) de la caméra de prise de vue (20) une position probable des structures (13) détectées, cherche celles-ci sur cette position probable dans l'image (21) de la caméra de prise de vue (20) et détermine leur position réelle dans l'image (21) de la caméra de prise de vue (20), ce après quoi la position réelle déterminée des structures (13) dans l'image (21) de la caméra de prise de vue (20) est utilisée par l'unité d'évaluation (40) pour calculer à nouveau la position propre de la caméra de prise de vue (20).

2. Dispositif selon la revendication 1,
**caractérisé par le fait que** la caméra de mesure (30) a une distance focale fixe et un angle d'ouverture supérieur à celui de la caméra de prise de vue (20).

3. Dispositif selon l'une ou les deux des revendications 1 et 2,
**caractérisé par le fait que** la caméra de prise de vue (20) a une distance focale fixe ou variable.

4. Dispositif selon la revendication 3,
**caractérisé par le fait que** la caméra de prise de vue (20) a une distance focale variable et l'objectif zoom de la caméra de prise de vue (20) est calibré de manière à ce que tous les angles d'ouverture possibles sur l'ensemble de la zone de réglage du zoom et du foyer soient connus, dans lequel l'unité d'évaluation (40) a accès à des informations relatives aux angles d'ouverture mémorisés.

5. Dispositif selon l'une ou plusieurs des revendications 1 à 4,
**caractérisé par le fait que** les structures (13) optiquement détectables sont des marques réalisées de manière définie dans l'environnement (10) qui sont **caractérisées par** la couleur, la luminosité et/ou la forme.

6. Dispositif selon la revendication 5,
**caractérisé par le fait que** des marques (13) sont disposées selon des motifs définis.

7. Dispositif selon l'une ou plusieurs des revendications 1 à 6,
**caractérisé par le fait que** les structures (13) optiquement détectables sont formées par des parties existantes de l'environnement (10).

8. Procédé de détermination de la position propre d'une caméra de prise de vue (20) au sein d'un environnement (10) dans lequel des structures (13) peuvent être détectées optiquement, dans lequel une unité d'évaluation (40) calcule la position propre de la caméra de prise de vue (20) au moins à partir de structures (13) dans l'image (31) d'une caméra de mesure (30) qui est monté à poste fixe dans une position relative connue par rapport à la caméra de prise de vue (20), et ladite caméra de prise de vue (20) et la caméra de mesure (30) sont orientées de manière à ce qu'elles enregistrent au moins en partie un détail commun (21) de l'environnement (10) dans lequel se trouvent des structures (13) qui sont détectées optiquement par les deux caméras (20; 30) respectivement dans une image (21; 31), dans lequel la caméra de mesure (30) transmet des données relatives à son image (31) à l'unité d'évaluation (40) qui détermine la position propre de la caméra de prise de vue (20) au moins à partir des structures (13) détectées par la caméra de mesure (30) dans son image (31),
**caractérisé par le fait que**
ladite unité d'évaluation (40) localise ces structures (13) au moins en partie également dans l'image (21) de la caméra de prise de vue (20) et corrige la position propre de la caméra de prise de vue (20) déterminée à partir de l'image (31) de la caméra de mesure (30), sur la base de la position des structures (13) déterminée à partir de l'image (21) de la caméra de prise de vue (20), dans lequel ladite unité d'évaluation (40) corrige la position propre déterminée de la caméra de prise de vue (20) en cherchant dans l'image (31) de la caméra de mesure (30) des structures (13) détectables optiquement, identifie celles-ci et effectue une estimation de la position des structures (13) détectées, ce après quoi l'unité d'évaluation (40) calcule dans l'image (21) de la caméra de prise de vue (20) une position probable des structures (13) détectées, cherche celles-ci sur cette position probable dans l'image (21) de la caméra de prise de vue (20) et détermine leur position réelle dans l'image (21) de la caméra de prise de vue (20), ce après quoi la position réelle déterminée des structures (13) dans l'image (21) de la caméra de prise de vue (20) est utilisée par l'unité d'évaluation (40) pour calculer à nouveau la position propre de la caméra de prise de vue (20).

9. Procédé selon la revendication 8,
**caractérisé par le fait que** l'unité d'évaluation (40) lisse l'image (31) de la caméra de mesure (30) en utilisant la position réelle déterminée des structures (13) dans l'image (21) de la caméra de prise de vue (20) pour calculer à nouveau la position des structures (13) dans l'image (21) de la caméra de prise de vue (20).

10. Procédé selon l'une ou plusieurs des revendications 8 ou 9,
**caractérisé par le fait que** la position fixe de la caméra de mesure (30) par rapport à la caméra de prise de vue (20) est calibrée avant de déterminer la position propre de la caméra de prise de vue (20).
